Europäisches Patentamt

European Patent Office

Office européen des brevets

(19)

(11) EP 0 504 671 B1

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(51) Int Cl.⁶: **G11B 5/84**

(21) Anmeldenummer: **92103799.0**

(22) Anmeldetag: **06.03.1992**

(54) **Vorrichtung und Verfahren zum Kalandrieren von magnetischen Aufzeichnungsträgern**

Apparatus and method for calandering magnetic recording media

Dispositif et procédé pour le calandrage de milieux d'enregistrement magnétique

(84) Benannte Vertragsstaaten:
**DE FR GB IT**

(30) Priorität: **15.03.1991 DE 4108553**

(43) Veröffentlichungstag der Anmeldung:
**23.09.1992 Patentblatt 1992/39**

(73) Patentinhaber: **BASF Magnetics GmbH**
**D-68165 Mannheim (DE)**

(72) Erfinder: **Baarfuesser, Johann**
**W-8035 Gauting (DE)**

(74) Vertreter: **Langfinger, Klaus-Dieter, Dr. et al**
**BASF Aktiengesellschaft,**
**Patentabteilung ZDX - C 6**
**D-67056 Ludwigshafen (DE)**

(56) Entgegenhaltungen:
**DE-A- 1 561 739      GB-A- 2 157 976**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Kalander zum Verdichten und Glätten von magnetischen Beschichtungen, welche auf einen bahnförmigen flexiblen unmagnetischen Schichtträger aufgebracht sind mittels einer harten Zentralwalze, um welche die Magnetbahn mit einer Seite geschlungen ist und wobei auf die andere Bahnseite mindestens drei gleichmäßig um die Zentralwalze verteilte Stützwalzen drücken, von denen mindestens eine Walze abschwenkbar ist.

Magnetische Aufzeichnungsträger bestehen zur Hauptsache aus flexiblen unmagnetischen Schichtträgern, auf welche im allgemeinen auf einer Seite eine magnetische Beschichtung aufgebracht worden ist, die im allgemeinen eine sehr geringe Dicke, zumeist unter 10 μm, hat. Das Kalandrieren ist erforderlich, um die Magnetschicht zu verdichten und die Oberfläche einzuebnen und auf diese Weise eine Glättung der Oberfläche zu erreichen.

Es sind Vorrichtungen zum Kalandrieren bekannt, bei denen in Walzenstühlen mehrere Walzen, gegebenenfalls mit elastischen Zwischenwalzen, übereinander angeordnet sind. Beispielweise sind aus der Monographie von Braginskij "Technologie der Magnetbandherstellung", Seite 271, Kalander mit drei bis neun Walzen bekannt. Ein typisches Walzenpaket besteht beispielsweise aus fünf metallischen Walzen und vier elastischen Walzen, die übereinander angeordnet und zwischen denen die zu kalandrierende Magnetbahn in wechselnder Richtung durch diese Anordnung hindurchgeführt wird, wobei die magnetische Oberfläche stets der harten metallischen Walze zugekehrt ist. Diese Walze ist im allgemeinen beheizt, so daß die Oberfläche dieser Walze eine Temperatur zwischen 40 und 200 °C haben kann. Die elastischen Walzen bestehen meistens aus einem Stahlkern, auf den ein Spezialpapier, Baumwolle, Polyamid, Polyurethan oder ein ähnliches Material aufgebracht ist. Probleme ergeben sich bei dieser bekannten Anordnung durch übermäßigen Verschleiß der elastischen Walzen sowie durch die Durchbiegung der Druckwalzen, wobei dieser Durchbiegung durch eine Bombage der Walze entgegengewirkt wird.

Die DE 15 61 739 beschreibt eine lose mitlaufende Zentralwalze, um die herum mehrere Stützwalzen, die gegebenenfalls untereinander verstellbar sind, angeordnet sind und wobei die Magnetbahn um die Zentralwalze umschlingend geführt wird. Auf diese Weise soll sich der Anpreßdruck leichter und gleichmäßiger einstellen lassen.

Eine ähnliche Anordnung beschreibt die DE 34 16 211, nur ist bei diesem Kalander die Zentralwalze ebenso wie die Stützwalzen fest gelagert. Dabei sind die Stützwalzen als Durchbiegungs-Regelwalzen gestaltet, auf deren Walzenmantel, über die Länge verteilte, durch Druckgeber belastete Stützelemente gelagert sind und wobei eine Regelvorrichtung die den Druckgebern zuzuführenden Drücke einzeln oder gruppenweise einzustellen vermag. Bei dieser Anordnung hat die Zentralwalze vorzugsweise einen größeren Durchmesser als die Stützwalzen. Ein wesentlicher Nachteil der eben beschriebenen Anordnung besteht darin, daß zum Reinigen der Zentralwalze der Kalander angehalten und die Bahn ausgefädelt werden muß, so daß kein kontinuierlicher Betrieb möglich ist.

Der vorliegenden Erfindung lag die Aufgabe zugrunde, einen Kalander der eingangs genannten gattungsmäßigen Art zu schaffen, bei dem während des Betriebes eine Reinigung der Zentralwalze möglich ist und bei der ein hoher Anpreßdruck bei gleichzeitig minimaler Biegebelastung der Zentralwalze gewährleistet ist.

Erfindungsgemäß wurde die Aufgabe gelöst mit einem Kalander mit den im kennzeichnenden Teil des Anspruchs 1 genannten Merkmalen. Anspruch 7 beinhaltet ein Verfahren zum Kalandrieren mit zwei Kalandervorrichtungen. Weitere Einzelheiten der Erfindung gehen aus den Unteransprüchen, der Beschreibung und den Zeichnungen hervor.

Die Erfindung wird nun anhand der Figuren näher erläutert und zwar zeigt

Figur 1    einen (ausgefädelten) Dreispalt-Kalander in Reihe geschaltet mit einem (eingefädelten) Vierspalt-Kalander

Figur 2    die gleiche Anordnung, jedoch bei eingefädeltem Dreispalt-Kalander und ausgefädeltem Vierspalt-Kalander

Figur 3    eine elastisch gestützte Zentralwalze

Figur 4    eine beheizte Zentralwalze mit elastischen Seitenscheiben

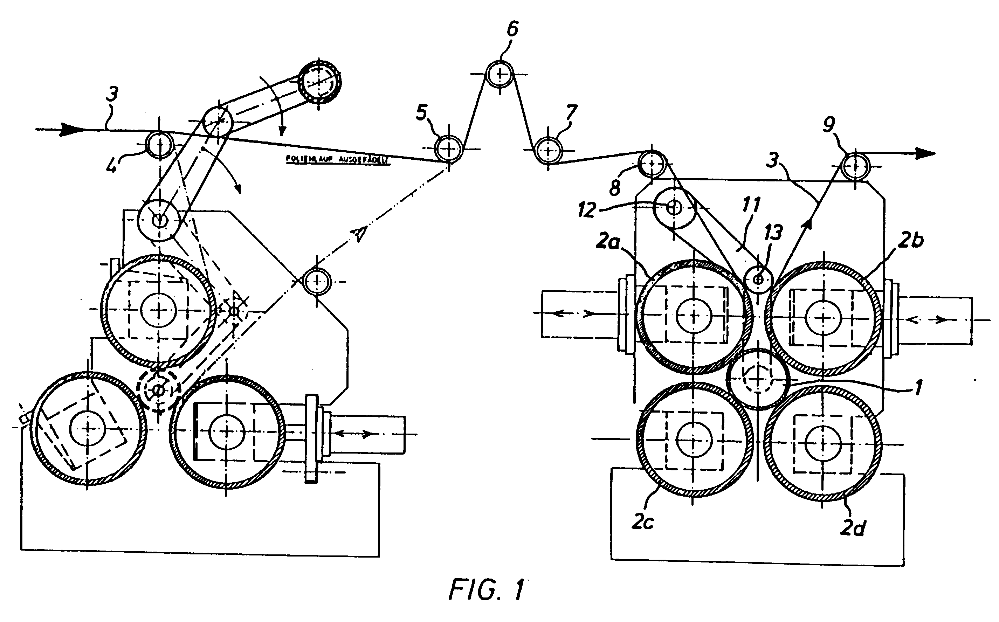

Die Erfindung ermöglicht, bei Anordnung mehrerer Kalander hintereinander, den inline-Betrieb ohne Abstellen der Beschichtungsanlage bei gleichzeitiger Reinigungsmöglichkeit der Kalanderwalzen während des Betriebens der magnetischen Beschichtung und der Trocknung. Figur 1 zeigt ein Ausführungsbeispiel.

Von einer (nicht gezeichneten) Beschichtungsanlage kommt die Magnetbahn (3) über Umlenkrollen (4 - 8) zu der erfindungsgemäßen Kalanderanordnung, von der zunächst die rechte (eingefädelte) Anordnung näher beschrieben werden soll. Um eine Zentralwalze (1) sind um je 90° versetzt vier Stützwalzen (2a - 2d) angeordnet, zwischen denen die Magnetbahn (3) hindurchgeführt wird, so daß sie einen großen Teil des Umfanges der Zentralwalze (1) umschlingt. Über die Umlenkrolle (9) wird die Bahn aus der Kalandervorrichtung ausgefahren und zu einer (nicht gezeichneten) Aufwicklung geführt. In einer bevorzugten Ausführung ist die Zentralwalze (1) eine Stahlwalze, während die vier Stützwalzen (2a - 2d) aus einem Stahlmantel mit einer elastischen Oberfläche bestehen. Mittels des erfindungsgemäßen Kalanders wird das Problem der Durchbiegung der Walzen bei hohen Liniendrücken gelöst.

Die Druckfläche (F) zweier Walzen mit den Radien r1 und r2 und mit den Elastizitätsmodulen E1 und E2, die mit der Kraft (P) zusammengepreßt werden, errechnet sich aus der Formel

$$F = \text{Walzenlänge} \times 3{,}04 \times \frac{P \cdot r}{2E1 \cdot E2 \, (E1 + E2)}$$

wobei

$$r = \frac{1}{\dfrac{1}{r1} + \dfrac{1}{r2}}$$

Bei der dargestellten Walzenanordnung kann jedoch die Zentralwalze, da diese durch ihre symmetrische Anordnung zwischen den Stützwalzen keiner Biegebelastung unterworfen ist, in ihrem Radius klein ausgeführt werden, wodurch sich der Wirkradius (r) entsprechend verkleinert. Dadurch wird die Druckfläche verkleinert und entsprechend der Liniendruck erhöht. Die fehlende Biegebelastung gestattet es auch, den Zylinder der Zentralwalze (1) sehr dünn und biegeelastisch auszuführen. Er besteht aus Metall, vorzugsweise aus Stahl. Dadurch ergibt sich der Vorteil, daß sowohl die Biegelinie der Stützwalzen kompensiert werden können, als auch die Bearbeitungsabweichungen bei den zylindrischen Walzen und bei dem Magnetbandmaterial teilweise kompensiert werden.

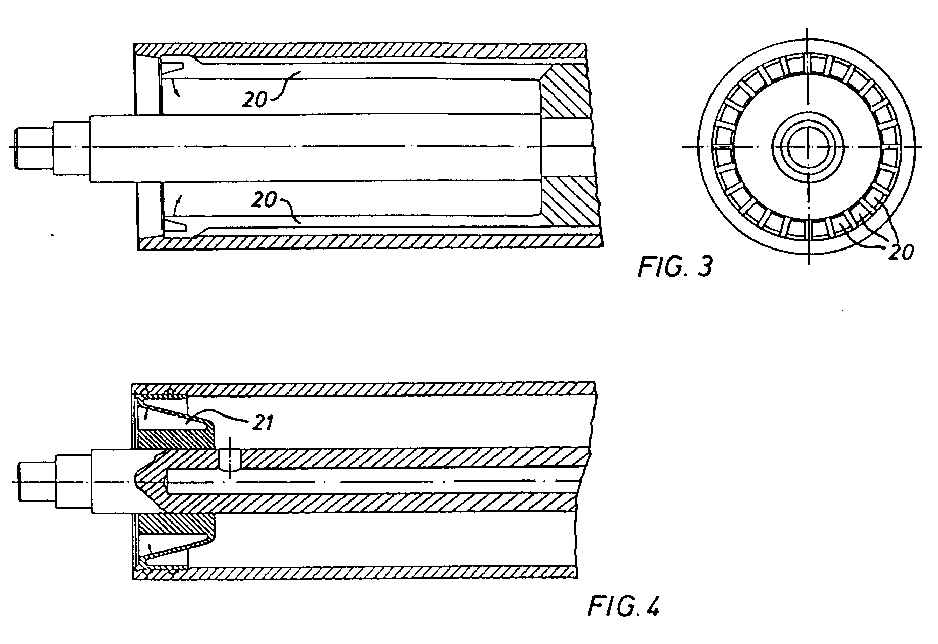

Wie die Figuren 3 und 4 zeigen, wird bei der Konstruktion der Zentralwalze bei der Befestigung des Zylinders eine ausreichende Flexibilität berücksichtigt, welche entweder, wie aus Figur 3 zu erkennen, durch axial verlaufende elastische Stützglieder (20) bewerkstelligt wird oder wie in Figur 4 bei einer beheizten Zentralwalze durch elastische Seitenscheiben (21).

Ein wesentliches Merkmal der vorliegenden Erfindung ist, daß die Zentralwalze (1) ausgeschwenkt werden kann. Dies geschieht mit einem zweiarmigen Gelenkhebel (11) mit dem Drehpunkt (12) und dem Gelenk (13). Dazu muß bei drei Stützwalzen (Figur 1, linker Teil) eine der unteren Stützwalzen weggeschwenkt werden, beziehungsweise bei vier Stützwalzen müssen die beiden oberen Stützwalzen weggeschwenkt werden. Dann wird mittels des erwähnten Gelenkhebels die Zentralwalze nach oben ausgehoben, wodurch die Magnetbahn aus einem Kalander völlig ausgefädelt ist, während sie in dem anderen Kalander nach wie vor eingefädelt ist und damit kalandriert wird.

Durch eine geeignete Vorrichtung, z. B. ein Schrittschaltmotor oder einen hydraulischen Zylinder, wird der Gelenkhebel mit der ausgefahrenen Zentralwalze in nahezu gestreckte Stellung nach oben gebracht. Der damit erreichte genügend weite Abstand zur Magnetbahn ermöglicht ein gefahrloses Hantieren an der Kalanderwalze. Um die Magnetbahn vor Verschmutzen beim Reinigungsvorgang der Zentralwalze zu schützen, kann zwischen Walze und Magnetbahn eine Abdeckung eingeschoben werden. Die ausgeschwenkte Anlage kann dann sehr bequem und ohne Gefährdung für das Personal gereinigt werden, wobei gleichzeitig die Produktion ohne Unterbrechung weitergeht.

Ist die Zentralwalze (1) in den Kalander eingeschwenkt, müssen die beiden Drehgelenke (12, 13) des Hebels (11) kraftlos sein, um der Zentralwalze (1) zwischen den 3 beziehungsweise 4 Stützwalzen die Möglichkeit zu geben, sich im freien Spiel der Kräfte die geeignete Position zu suchen.

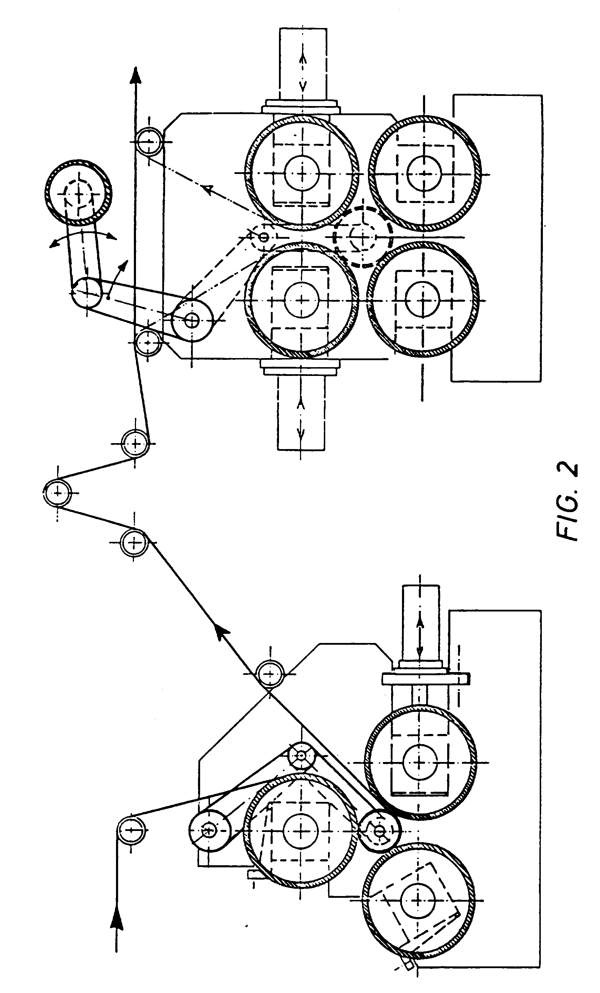

Jedem Fachmann ist klar, daß die Figuren 1 und 2 nur zwei mögliche Kombinationen zeigen, und daß auch andere Varianten möglich sind. Ferner ist es auch möglich, daß die Zentralwalze eine Walze mit elastischer Oberfläche ist, während die Stützwalzen Stahlwalzen sind. Ferner können sowohl die Zentralwalze als auch die Stützwalze aus Stahl bestehen, in diesem Fall werden die Stützwalzen beheizt und die Zentralwalze, die nicht beheizt werden braucht, kann aus diesem Grund klein und leicht elastisch verformbar ausgeführt werden.

Mittels des erfindungsgemäßen Kalanders bestehen immer mindestens drei Druckspalte mit hohem Liniendruck, während gleichzeitig ein Kalander gereinigt werden kann. Nach erfolgter Reinigung eines Kalanders wird die Zentralwalze wieder eingeschwenkt und die Stützwalzen angefahren, wodurch die Produktion ohne Unterbrechung weitergeht. Besondere Vorteile sind mittels des Kalanders bei Walzen mit größerer Länge zu erzielen, da bei diesen das Problem der Durchbiegung besonders gravierend ist.

## Patentansprüche

1. Kalander zum Verdichten und Glätten von magnetischen Beschichtungen, welche auf einem bahnförmigen flexiblen unmagnetischen Schichtträger aufgebracht sind, mittels einer Zentralwalze (1), um welche die Bahn (3) mit einer Seite geschlungen ist und wobei auf die andere Bahnseite mindestens drei gleichmäßig um die Zentralwalze (1) verteilte Stützwalzen (2) drücken, von denen mindestens eine Stützwalze abschwenkbar ist, dadurch gekennzeichnet, daß die Zentralwalze bei mindestens einer abgeschwenkten Stützwalze zum Reinigen ihrer Oberfläche ausschwenkbar ist, daß die Bahn dabei komplett aus der Kalandervorrichtung ausfädelbar ist und daß der Radius der Zentralwalze kleiner ist als der Radius der Stützwalzen.

2. Kalander nach Anspruch 1, dadurch gekennzeichnet, daß die Zentralwalze eine harte Oberfläche besitzt.

3. Kalander nach Anspruch 2, dadurch gekennzeichnet, daß die Stützwalzen eine elastische Oberfläche haben und daß die Zentralwalze beheizbar ist.

4. Kalander nach Anspruch 2, dadurch gekennzeichnet, daß auch die Stützwalzen eine harte Oberfläche besitzen.

**5.** Kalander nach den Ansprüchen 2-4, dadurch gekennzeichnet, daß der Zylinder der Zentralwalze mit elastischen Mittel (20,21) gestützt ist.

**6.** Kalander nach den Ansprüchen 1 bis 5, dadurch gekennzeichnet, daß die Zentralwalze mittels eines mit ihr verbundenen zweiarmigen Gelenkhebels (11) bei ausgeschwenkten Stützwalzen aus der Kalandervorrichtung ausschwenkbar ist und die Magnetbahn vollständig freigibt.

**7.** Verfahren zum Kalandrieren von magnetischen Beschichtungen mit zwei Kalandervorrichtungen nach den Ansprüchen 1 bis 6, dadurch gekennzeichnet, daß die Magnetbandbahn nacheinander die zwei Kalandervorrichtungen durchläuft, bei denen höchstens eine Zentralwalze zwecks Reinigung ausgeschwenkt ist.

## Claims

**1.** A calender for compressing and polishing magnetic coatings which have been applied to a flexible nonmagnetic substrate in web form by means of a central roll (1), around which the web (3) is wrapped with one side, while bearing against the other side of the web are at least three supporting rolls (2) which are distributed evenly around the central roll (1) and of which at least one can be swung away, wherein the central roll can, with at least one supporting roll swung away, be swung out for cleaning of its surface, wherein the web can thereby be unthreaded completely from the calender apparatus and wherein the radius of the central roll is less than the radius of the supporting rolls.

**2.** The calender as claimed in claim 1, wherein the central roll has a hard surface.

**3.** The calender as claimed in claim 2, wherein the supporting rolls have a flexible surface and wherein the central roll is heatable.

**4.** The calender as claimed in claim 2, wherein the supporting rolls also have a hard surface.

**5.** The calender as claimed in any of claims 2 to 4, wherein the cylinder of the central roll is supported by flexible means (20, 21).

**6.** The calender as claimed in any of claims 1 to 5, wherein, with supporting rolls swung out, the central roll can be swung out from the calender apparatus by means of a two-armed jointed lever (11), connected to it, and completely free the magnetic web.

**7.** A process for calendering magnetic coatings using two calender apparatuses as claimed in any of claims 1 to 6, wherein the magnetic tape web runs successively through the two calender apparatuses, on which at most one central roll is swung out for the purposes of cleaning.

## Revendications

**1.** Calandre pour compacter et lisser des revêtements magnétiques, appliqués sur un support de couche non magnétique, flexible, en forme de bande, au moyen d'un rouleau central (1), autour duquel la bande (3) est enlacée par une face et sur l'autre face de bande pressant au moins trois rouleaux d'appui (2) répartis régulièrement autour du rouleau central (1) dont au moins un rouleau d'appui est susceptible de s'écarter par pivotement, caractérisée en ce que, pour nettoyer sa surface, le rouleau central est susceptible de pivoter, lorsqu'au moins un rouleau d'appui est écarté par pivotement, en ce que la bande est alors susceptible d'être complètement désenfilée du dispositif de calandrage, et en ce que le rayon du rouleau central est inférieur au rayon des rouleaux d'appui.

**2.** Calandre selon la revendication 1, caractérisée en ce que le rouleau central a une surface dure.

**3.** Calandre selon la revendication 2, caractérisée en ce que les rouleaux d'appui ont une surface élastique et en ce que le rouleau central est susceptible d'être chauffé.

**4.** Calandre selon la revendication 2, caractérisée en ce que les rouleaux d'appui ont également une surface dure.

**5.** Calandre selon les revendications 2 à 4, caractérisée en ce que le cylindre du rouleau central est soutenu par des moyens élastiques (20, 21).

**6.** Calandre selon les revendications 1 à 5, caractérisée en ce que le rouleau central est susceptible d'être complètement basculé hors du dispositif de calandrage lorsque les rouleaux d'appui sont écartés par pivotement, au moyen d'un levier articulé (11) à deux bras qui lui est relié, et ceci libérant complètement la bande magnétique.

**7.** Procédé de calandrage de revêtements magnétiques avec deux dispositifs de calandrage, selon les revendications 1 à 6, caractérisé en ce que la bande de ruban magnétique passe dans les deux dispositifs de calandrage l'un après l'autre, au maximum un rouleau central étant basculé en vue de nettoyage lors du passage dans ces dispositifs de calandrage.

**FIG. 1**

EP 0 504 671 B1

FIG. 2

FIG. 3

FIG. 4

EP 0 504 671 B1